# EUROPEAN PATENT SPECIFICATION

(11) **EP 4 370 820 B1**
(45) Date of publication and mention of the grant of the patent: **05.03.2025**
(21) Application number: 22741775.5
(22) Date of filing: 13.07.2022
(51) Int. Cl.: F17C 1/16

(54) **REINFORCED PRESSURE VESSEL**
VERSTÄRKTER DRUCKBEHÄLTER
RÉCIPIENT SOUS PRESSION RENFORCÉ

(30) Priority: 16.07.2021 LU 102847
(43) Date of publication of application: 22.05.2024
(73) Proprietor: PLASTIC OMNIUM NEW ENERGIES FRANCE, 69007 Lyon (FR)
(72) Inventor: CRIEL, Bjorn, 1130 BRUXELLES (BE); NOUWEN, Geert, 1130 BRUXELLES (BE); DEVISSCHER, Dries, 1130 BRUXELLES (BE); NGUYEN, Khanh-Hung, 1130 BRUXELLES (BE)
(74) Representative: LLR
(86) International application number: PCT/EP2022/069564
(87) International publication number: WO 2023/285513

(56) References cited:
- WO-A1-2018/066293
- DE-A1- 102010 020 944
- JP-A- 2005 113 971
- US-A1- 2017 241 591
- US-A1- 2018 259 125

## Description

The invention relates to pressure vessels for vehicles. More precisely, the invention relates to a pressure vessel and a vehicle comprising such a pressure vessel.

High pressure vessels for vehicles generally comprise a hollow container, also called a liner, having a general cylindrical shape with two dome-shaped longitudinal ends and made of plastic material, such material being chosen for being lightweight and cheap to produce, or other material such as metal (e.g. aluminum). This container is intended for storing gas under pressure, for example dihydrogen, to be used by the vehicle equipped with the pressure vessel for diverse functions, such as source of power. The gas under pressure exerts strong constraints on the inner surface of the container which may damage the integrity of the container and cause hazardous leakage, especially with combustible gas like dihydrogen.

To improve the mechanical properties of the container, it is known to wind a filament made of a reinforcing fibre, for example carbon fibre, all around the outer surface of the container. The filament is embedded in a resin to facilitate the winding and to make sure that each piece of the outer surface of the container is covered.

For the dome-shaped longitudinal ends of the container, it is known to manufacture a dome reinforcement part or dome reinforcement shell, comprising a winding of filament, independently of the container and then, in a subsequent step, fitting the dome reinforcement shell on the container. The document DE 10 2017 208 492 A1 provides an example of such a dome reinforcement shell. When such a dome reinforcement shell is used, the dome-shaped longitudinal ends of the container and the dome reinforcement shell are provided with a geodesic dome contour in order to cause a constant tension in the wounded reinforcing fibre in all point of the run of the fibre. However, it comes with several drawbacks.

The presence of the dome reinforcement shell locally increases the stress concentration inside the wounded reinforcing fibre, in particular in the tip region of the dome reinforcement shell, which makes it necessary to use more reinforcing fibre than when there is no dome reinforcement shell used. Using more reinforcing fibre is not desirable because it is expansive, time consuming during the manufacture of the pressure vessel and the resulting vessel is heavier.

Document US 2017/241591 A1 describes a pressure vessel according to the preamble of claim 1.

In view of the above, there exists a need for optimizing the pressure vessel by maintaining good mechanical properties while reducing the quantity of reinforcing fibre used.

To this end, it is provided according to the invention a pressure vessel comprising:
- a liner defining an internal fluid storage chamber and having:
   - a generally cylindrical central portion having a first outer diameter D1 at a first longitudinal end,
   - a first dome-shaped longitudinal end having a base of a second outer diameter D2, the second outer diameter D2 being smaller than the first outer diameter D1, and
   - a first intermediate portion located between the generally cylindrical central portion and the first dome-shaped longitudinal end and connecting the first longitudinal end of the generally cylindrical central portion to the base of the first dome-shaped longitudinal end,
   wherein said first dome-shaped longitudinal end of the liner has a dome contour which is less concave toward the internal fluid storage chamber than a dome-shaped longitudinal end having a geodesic dome contour,
- a first dome reinforcement shell having a shape complementary to the shape of both the first dome-shaped longitudinal end and the first intermediate portion of the liner, the first dome reinforcement shell being fitted on both the first dome-shaped longitudinal end and the first intermediate portion of the liner,
- a boss, and
- an outer composite structure enclosing or encasing the liner and the first dome reinforcement shell.

Thanks to the complementary shape of the first dome reinforcement shell, the mechanical properties of the pressure vessel are improved by reinforcing the first dome-shaped longitudinal end and the first intermediate portion. In particular, the stress is reduced inside the outer composite structure and inside the first dome reinforcement shell. This makes it possible to use less of fibre either for the manufacture of the first dome reinforcement shell and for the outer composite structure while maintaining good mechanical properties. This allows a weight reduction of the resulting pressure vessel. Further, this allows a reduction of manufacturing time as the time of winding the outer composite structure over the liner and the first dome reinforcement shell is reduced.

In addition, thanks to the difference in diameter between the first outer diameter D1 and the second outer diameter D2, an insertion area is created in the first intermediate portion such that the first dome reinforcement shell either flushes with the liner or does not protrude excessively which avoids application of an excessive stress inside the outer composite structure at the point where the first dome reinforcement shell would protrude. In a preferred embodiment, the first outer diameter D1 and the second outer diameter D2 are such that the first dome reinforcement shell flushes with the liner. As such, the outer surface of the pressure vessel is particularly smooth. This improves the application of the outer composite structure and reduces the stress level within the pressure vessel.

By the expression "the first dome reinforcement shell flushes with the liner", is meant that the outer surface of the liner is geometrically blended with the outer surface of the first dome reinforcement shell.

By the expression "filament", is meant continuous fiber tows, preferably carbon fibers, glass fibers or aramid fibers, impregnated with a liquid matrix so as to form a composite material, or not pre-impregnated (i.e. dry fibers). There are two main families of composite materials, depending on the type of matrix used. The thermoset composites and the thermoplastic composites, which are formed with a thermoset resin or a thermoplastic polymer as matrix.

A thermoset resin is formed by mixing two or more reactive components forming a reactive thermoset precursor, which reacts upon exposure to curing conditions (e.g. heat, UV or other radiations, or simply by contacting them with one another, etc.) to form the thermoset resin. The thermoset matrix must be fully cured to yield high performance composites. Once cured, the thermoset resin is solid and cannot be further processed or reshaped as the resin is unable to flow anymore. Examples of thermoset resins include unsaturated polyester, epoxy, vinyl ester, polyurea, isocyanurate, and polyurethane resins. It is possible to produce thermoset prepregs made of fibers impregnated with a reactive resin which has been only partially cured to make it tacky, but still soft. The prepregs can be stored and later further processed under pressure by heating or exposing the resin to UV to complete curing and consolidating the prepregs.

A thermoplastic polymer can change from a solid state (or non-flowable state) to a liquid state (or flowable state) and reverse by increasing and lowering the temperature, respectively. In case of semi-crystalline polymers, lowering the temperature of the thermoplastic drives the formation of crystals and the solidification of the thermoplastic. Inversely, heating a semi-crystalline polymer above the melting temperature thereof melts the crystals and the thermoplastic can flow. Examples of semi-crystalline thermoplastics include polyether ketones such as polyether ether ketone (PEEK), polyether ketone ketone (PEKK), poly ether ketone ketone ether ketone (PEKKEK), polyamides, such as polyamide 6 (PA6), polyamide 66 (PA66), polyamide 10 (PA10), polyamide 11 (PA11), polyamide 12 (PA12), polyolefins such as polyethylene (PE), polypropylene (PP), and the like. Amorphous thermoplastics do not form crystals and do not have a melting temperature. The amorphous thermoplastics solidify or become flowable depending on whether the material temperature is below or above the glass transition temperature thereof. Examples of amorphous thermoplastics include polyetherimide (PEI), polysulfone (PSU), polyethersulfone (PES), polycarbonate (PC), polystyrene (PS), thermoplastic polyurethane (TPU), and the like. Both semi-crystalline and amorphous thermoplastics can therefore be reshaped by heating them above their melting or glass transition temperatures and frozen into their new shape by lowering the temperature accordingly. Even though not strictly correct from a physical point of view, for sake of simplicity, both semi-crystalline and amorphous thermoplastics in a liquid state are herein referred to as a "thermoplastic melt".

The liner may be made in any material conventionally used for a pressure vessel, in particular for a pressure vessel for a vehicle. For example, the liner may be made of metal, such as aluminum or steel, or may be made of plastic.

The first dome reinforcement shell is, for example, a dome reinforcement shell as described in the prior art document previously discussed.

In the context of the present invention, a geodesic dome is meant to designate a dome structure based on a network of great circles at the surface of a hemisphere. The geodesic intersects to form triangular elements that have local triangular rigidity and also distribute the stress across the structure. A geodesic dome contour can be generated by the technique described in pages 244-245 of the "Handbook of Composite Reinforcements" by Stuart M. Lee (ISBN: 0-471-18861-1). The geodesic dome contour provides isotensoid loading of a filament.

The term "isotensoid" refers to the property of the fully wound pressure vessel in which each filament of the outer composite structure which is wrapped around the liner and the first dome reinforcement shell experiences a constant pressure at all points in its path. In this configuration, virtually the entire stress imposed on the vessel by a compressed internal fluid is assumed by the filaments of the outer composite structure with very little of the stress being assumed by the liner.

As the first dome reinforcement shell has a shape complementary to the shape of the first dome-shaped longitudinal end of the liner, the first dome reinforcement shell also has a dome contour which is less concave toward the internal fluid storage chamber than a dome reinforcement shell having a geodesic dome contour.

Advantageously, the shape of the first intermediate portion of the liner has an outer peripheral surface selected from the group consisting of cylindrical, frustoconical, curved and combinations thereof.

As such, the outer surface of the liner comprising the first dome reinforcement shell is particularly smooth. This improves the application of the outer composite structure and reduces the stress levels within the pressure vessel.

Preferably, the outer peripheral surface of the first intermediate portion is a combination of a first frustoconical surface and a first cylindrical surface.

Thus, the liner can be seen as a stepped liner comprising a first tapered outer shoulder between the generally cylindrical central portion and the first dome-shaped longitudinal end.

Advantageously, an angle γ formed between the first frustoconical surface and the first cylindrical surface of the first intermediate portion is less than 15°, and preferably is less than 10°.

This angle allows a smooth transition from the first frustoconical surface to the first cylindrical surface of the first intermediate portion and avoids the creation of sharp edges which may cause damages to the outer composite structure. This angle further allows reducing the stress inside the liner in the tip region of the first dome reinforcement shell.

Advantageously, an angle σ formed between the first frustoconical surface and an outer peripheral surface of the generally cylindrical central portion is less than 15°, and preferably is less than 10°.

This angle allows a smooth transition from the first frustoconical surface to the outer peripheral surface of the generally cylindrical central portion and avoids the creation of sharp edges which may cause damages to the outer composite structure. Further, when the first intermediate portion includes a first tapered outer shoulder for accommodating the tip of the first dome reinforcement shell, this angle reduces the stress inside the liner in the tip region of the first dome reinforcement shell.

Preferably, a greatest distance between the dome contour of the first dome-shaped longitudinal end and the dome contour of a dome-shaped longitudinal end having a geodesic dome contour is comprised between 0.1% and 5% of the first outer diameter D1, preferably between 0.5% and 2.5% of the first outer diameter D1.

These values are suitable for the first dome-shaped longitudinal end, easy to implement in the manufacturing of the liner and allows a better reduction of the stress in the outer composite structure enclosing or encasing the liner and the first dome reinforcement shell. This reduction of the stress permits a reduction of the composite structure used.

In another embodiment, the pressure vessel further comprises a hoop layer wound around the generally cylindrical central portion of the liner such that the first outer diameter D1 includes the hoop layer.

This arrangement allows the liner to be a classical liner rather than a stepped liner. A classical liner is a liner without step.

In a preferred embodiment, the pressure vessel is a pressure vessel wherein:
- the liner further comprising:
   - a third outer diameter at a second longitudinal end, opposite to the first longitudinal end, of the generally cylindrical central portion,
   - a second dome-shaped longitudinal end having a base of a fourth outer diameter, the fourth outer diameter being smaller than the third outer diameter, and
   - a second intermediate portion located between the generally cylindrical central portion and the second dome-shaped longitudinal end and connecting the second longitudinal end of the generally cylindrical central portion to the base of the second dome-shaped longitudinal end,
   wherein said second dome-shaped longitudinal end of the liner has a dome contour which is less concave toward the internal fluid storage chamber than a dome-shaped longitudinal end having a geodesic dome contour,
- the pressure vessel further comprises a second dome reinforcement shell having a shape complementary to the shape of both the second dome-shaped longitudinal end and the second intermediate portion of the liner, said second dome reinforcement shell being fitted on both the second dome-shaped longitudinal end and the second intermediate portion of the liner, and
- the outer composite structure enclosing or encasing the liner and the two dome reinforcement shells.

With this arrangement, each longitudinal end of the generally cylindrical central portion of the liner has a dome-shaped longitudinal end which presents the advantageous mechanical properties of the invention.

Advantageously, the third outer diameter is approximately equal to the first outer diameter.

Preferably, the fourth outer diameter is approximately equal to the second outer diameter.

Advantageously, the shape of the second intermediate portion of the liner has an outer peripheral surface selected from the group consisting of cylindrical, frustoconical, curved and combinations thereof.

As such, the outer surface of the liner comprising the second dome reinforcement shell is particularly smooth. This improves the application of the outer composite structure and reduces the stress levels within the pressure vessel.

Preferably, the outer peripheral surface of the second intermediate portion is a combination of a second frustoconical surface and a second cylindrical surface.

Thus, the liner can be seen as a stepped liner comprising a second tapered outer shoulder between the generally cylindrical central portion and the second dome-shaped longitudinal end.

Advantageously, an angle formed between the second frustoconical surface and the second cylindrical surface of the second intermediate portion is less than 15°, and preferably is less than 10°.

This angle allows a smooth transition from the second frustoconical surface to the second cylindrical surface of the second intermediate portion and avoids the creation of sharp edges which may cause damages to the outer composite structure. This angle further allows reducing the stress inside the liner in the tip region of the second dome reinforcement shell.

Advantageously, an angle formed between the second frustoconical surface and an outer peripheral surface of the generally cylindrical central portion is less than 15°, and preferably is less than 10°.

This angle allows a smooth transition from the second frustoconical surface to the outer peripheral surface of the generally cylindrical central portion and avoids the creation of sharp edges which may cause damages to the outer composite structure. Further, when the second intermediate portion includes a second tapered outer shoulder for accommodating the tip of the second dome reinforcement shell, this angle reduces the stress inside the liner in the tip region of the second dome reinforcement shell.

Preferably, a greatest distance between the dome contour of the second dome-shaped longitudinal end and the dome contour of a dome-shaped longitudinal end having a geodesic dome contour is comprised between 0.1% and 5% of the third outer diameter, preferably between 0.5% and 2.5% of the third outer diameter.

These values are suitable for the second dome-shaped longitudinal end, easy to implement in the manufacturing of the liner and allows a better reduction of the stress in the outer composite structure enclosing or encasing the liner and the second dome reinforcement shell. This reduction of the stress permits a reduction of the composite structure used.

In another embodiment, the pressure vessel further comprises a hoop layer wound around the generally cylindrical central portion of the liner such that the third outer diameter includes the hoop layer.

This arrangement allows the liner to be a classical liner rather than a stepped liner. A classical liner is a liner without step.

It is also provided according to the invention a vehicle comprising a pressure vessel as described above.

### Brief description of the figures

Other features and advantages would appear by reading the following description, given as an illustrative and non-restrictive example, and with the annexed drawings in which:
- figure 1 is a general view of a vehicle according to the invention,
- figure 2 is a cross section of a pressure vessel according to a first embodiment of the invention,
- figures 3A and 3B are simulation graphics comparing the repartition of differential internal stresses in the dome reinforcement shell of the pressure vessel of figure 2 and in a dome reinforcement shell of the prior art in a first layer of the dome reinforcement shell (figure 3A) and in a second layer of the dome reinforcement shell (figure 3B).
- figure 4 is a simulation graphic comparing the repartition of differential internal stress in the outer composite structure of the pressure vessel of figure 2 and in an outer composite structure of the prior art, and
- figure 5 is a cross section of a pressure vessel according to a second embodiment of the invention.

### Detailed description

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

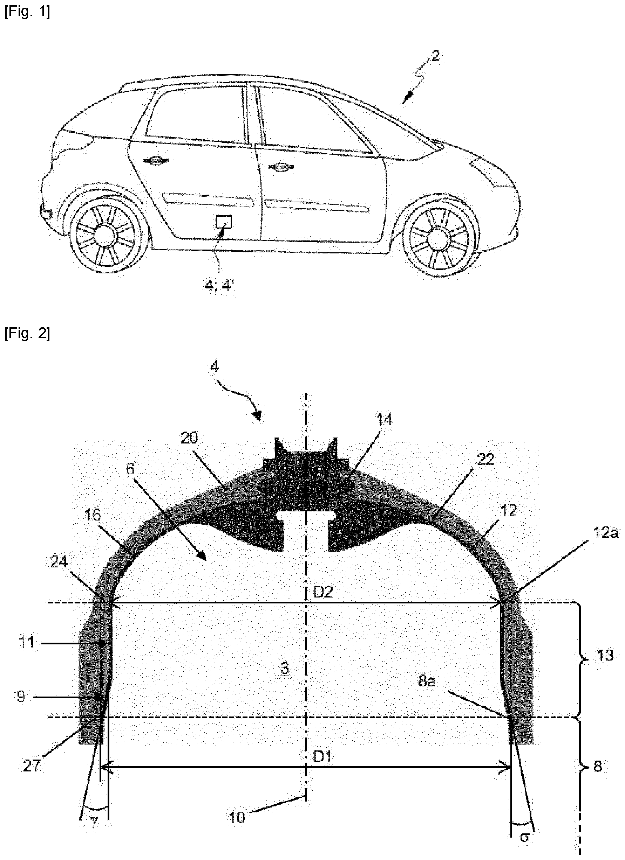

Figure 1 represents a vehicle 2 comprising a pressure vessel 4; 4' configured for containing a gas under high pressure. For example, the pressure vessel vessel 4; 4' may contain dihydrogen for powering a fuel cell of the vehicle. By the expression "pressure vessel", is meant a vessel intended for storing gas under pressure able to withstand an internal pressure going up to 700 bar. For example, the pressure vessel may be compliant with Addendum 133 - Regulation No. 134 of the *"Agreement Concerning the Adoption of Uniform Technical Prescriptions for Wheeled Vehicles, Equipment and Parts which can be Fitted and*/*or be Used on Wheeled Vehicles and the Conditions for Reciprocal Recognition of Approvals Granted on the Basis of these Prescriptions"* issued by the United Nations.

Figure 2 represents a half of a pressure vessel 4 according to a first embodiment of the invention. The pressure vessel 4 comprises a liner 6 defining a fluid storage chamber 3 of the pressure vessel 4. The liner 6 has a generally cylindrical central portion 8 defining a longitudinal axis 10 and two similar dome-shaped longitudinal ends: a first dome-shaped longitudinal end 12 and a second dome-shaped longitudinal end (only the first dome-shaped longitudinal end 12 is shown on figure 2). The liner 6 has a plane of symmetry which is perpendicular to the longitudinal axis 10 and pass through a center of volume of the liner 6. In other embodiments, the liner may have only one dome-shaped longitudinal end 12.

In the following, only the first dome-shaped longitudinal end 12 will be described, knowing the second one can be deduced by symmetry with respect to the plane of symmetry. It is the same for the first intermediate portion 13.

The generally cylindrical central portion 8 has a first outer diameter D1 at a first longitudinal end 8a of the liner 6. The first dome-shaped longitudinal end 12 has a central axis coaxial with the longitudinal axis 10 and a base portion 12a of a second outer diameter D2, D2 being smaller than D1. The liner 6 further comprises a first intermediate portion 13 located between the generally cylindrical central portion 8 and the first dome-shaped longitudinal end 12. The first intermediate portion 13 connects the first longitudinal end 8a of the generally cylindrical central portion 8 to the base portion 12a of the first dome-shaped longitudinal end 12.

In the present embodiment, the first intermediate portion 13 of the liner 6 has an outer peripheral surface consisting in a combination of a first frustoconical surface 9 and a first cylindrical surface 11. The angle γ formed between the first frustoconical surface 9and the first cylindrical surface 11 of the first intermediate portion 13 is less than 15°, and preferably is less than 10°. This angle corresponds to the inclination of the first frustoconical surface 9 with respect to the first cylindrical surface 11 and allows a smooth transition between those two parts which avoids the creation of sharp edges. Further, an angle σ formed between the first frustoconical surface 9 and an outer peripheral surface of the generally cylindrical central portion 8 is less than 15°, and preferably is less than 10°. This angle corresponds to the inclination of the first frustoconical surface 9 with respect to the outer peripheral surface of the generally cylindrical central portion 8 and allows a smooth transition between those two parts which avoids the presence of sharp edges.

The first dome-shaped longitudinal end 12 of the liner 6 has a dome contour which is less concave toward the internal fluid storage chamber 3 than a dome-shaped longitudinal end having a geodesic dome contour, such as the dome-shaped longitudinal end described in document DE 10 2017 208 492 A1. It is provided that a greatest distance between the dome contour of the first dome-shaped longitudinal end and the dome contour of a dome-shaped longitudinal end having a geodesic dome contour is comprised between 0.1% and 5% of the first outer diameter D1, preferably between 0.5% and 2.5% of the first outer diameter D1.

The pressure vessel 4 comprises a boss 14 for charging and discharging a fluid into and out of the liner 6. The boss 14 is fitted in an aperture located at the first dome-shaped longitudinal end 12 of the liner 6.

The pressure vessel 4 comprises a first dome reinforcement shell 16 fitted on the first dome-shaped longitudinal end 12 of the liner 6. In this embodiment, the pressure vessel 4 comprises two similar dome reinforcement shells, each fitted on one dome-shaped longitudinal end of the liner 6, the two dome reinforcement shells being symmetric from each other with respect to the aforementioned plane of symmetry. In the following, only the first dome reinforcement shell 16 will be described, knowing the second one can be deduced by symmetry with respect to the plane of symmetry. In the present embodiment, the difference in diameter between the first outer diameter D1 and the second outer diameter D2 is such that an insertion area in the form of a first tapered outer shoulder is created in the first intermediate portion 13 such that the first dome reinforcement shell 16 flushes with the liner 6. In the latter position, the first tapered outer shoulder accommodates a tip 27 of the first dome reinforcement shell 16.

The pressure vessel 4 comprises an outer composite structure 20 enclosing or encasing the liner 6 and the first dome reinforcement shell 16. Such outer composite structure 20 being well-known in the manufacturing of pressure vessels, it will not be further described in the following of the description.

The first dome reinforcement shell 16 consists of a winding of layers of fibre-reinforced composite material. The fibre-reinforced composite material may either be pre-impregnated and cured after being laid or not be pre-impregnated and impregnated by, for example, a resin infusion process or a resin transfer molding process, commonly called a RTM process. During such processes, the curing of the composite material takes place while the composite material remains inside the resin infusion tool or the resin transfer mold. It should be noted that the RTM process permits to obtain an extra smooth outer surface of the first dome reinforcement shell 16 with decreased internal stresses. The first dome reinforcement shell 16 has a dome-shaped portion 22 with a base 24 and a central axis which is coaxial with the longitudinal axis 10 of the liner 6. In the present embodiment, the first dome reinforcement shell 16 has a shape complementary to the shape of both the first dome-shaped longitudinal end 12 and the first intermediate portion 13 of the liner 6. Thus, the first dome reinforcement shell 16 also has a dome contour which is less concave toward the internal fluid storage chamber 3 than a dome reinforcement shell having a geodesic dome contour. The first dome reinforcement shell 16 is fitted on both the first dome-shaped longitudinal end 12 and the first intermediate portion 13 of the liner 6.

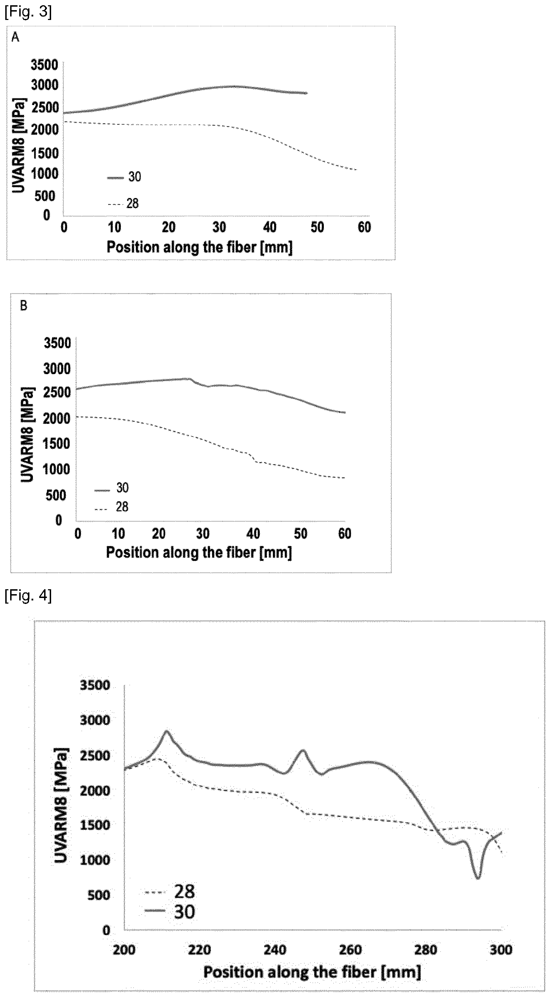

Figures 3A and 3B illustrate simulations in the software ABAQUS comparing the stress in the first dome reinforcement shell 16 and the stress in a dome reinforcement shell as proposed by the prior art document DE 10 2017 208 492 A1 cited in the preamble, respectively in a first and in a second layer of fibre-reinforced composite material of the first dome reinforcement shell 16 and the dome reinforcement shell of the prior art.
Figure 4 illustrates simulations in the software ABAQUS comparing the stress in a proximal layer of the outer composite structure 20 and the stress in a proximal layer of an outer composite structure of the prior art.
Figures 3A, 3B and 4 illustrate the lamina stress in the fibre direction in the filament, which corresponds to the output UVARM8 in the simulation. In these three figures, the dotted line 28 corresponds to the evolution of the stress in the first dome reinforcement shell 16 or in the outer composite structure 20 of a pressure vessel according to the invention, and the full line 30 corresponds to the evolution of the stress in a dome reinforcement shell or an outer composite structure of a pressure vessel according to the prior art, wherein the dome-shaped longitudinal end of the liner has a geodesic dome contour.

The figures 3A, 3B and 4 show two improvement coming from the invention. First, the stress in the layers of fibre-reinforced composite material of the first dome reinforcement shell 16 is reduced of approximately 500 MPa along the fibre (see figures 3A and 3B). For the first layer it may be seen that the stress is reduced along the fibre in the case of the dome-shaped longitudinal end 12 having a non-geodesic dome contour, whereas the stress slightly increases in the case of a dome-shaped longitudinal end having a geodesic dome contour. Second, the stress in the outer composite structure 20 is also reduced of about 500 MPa to 1000 MPa in function of the position along the fibre and that the invention permits to smoothen the evolution of the stress along the fibre, thus eliminating the zones of concentrating stress that could lead to potential breakage of the pressure vessel. Such breakage is typically generated after a consecutive pressure cycling going from, for example, 20 bar to 700 bar.

Thanks to these advantages, it is possible to use less fibres in the outer composite structure 20 while maintaining the same mechanical properties for the pressure vessel. The resulting pressure vessel is more lightweight and requires less manufacturing time.

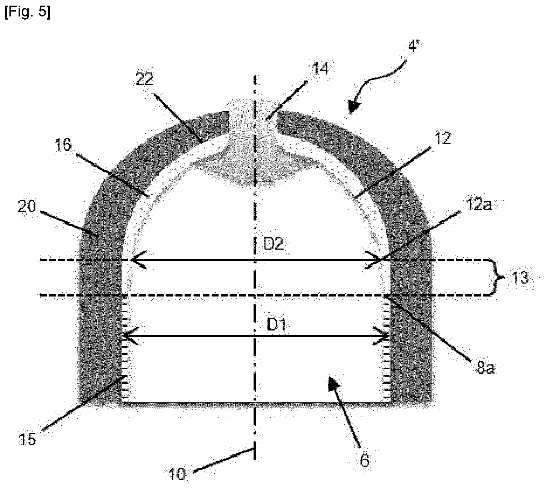

Figure 5 shows a variant embodiment of the invention. In this embodiment, a hoop layer 15 is wound around the generally cylindrical central portion 8 of the liner 6 such that the first outer diameter D1 includes the hoop layer 15.

The pressure vessel of the invention may be manufactured by means which are already well known in the art and which will not be described in further details here.

The here-above embodiments are illustrative and not restrictive embodiments. Obviously, many modifications and variations of the present invention are possible in the light of the above teachings without deviating from its inventive concept. It has therefore to be understood that the invention may be practiced otherwise that as specifically described.

### List of references

2: vehicle
3: internal fluid storage chamber
4; 4': pressure vessel
6: liner
8: central portion of the liner 6
8a: first longitudinal end of the central portion 8
9: first frustoconical surface
10: longitudinal axis
11: first cylindrical surface
12: first dome-shaped longitudinal end of the liner 6
12a: base of the first dome-shaped longitudinal end 12
13: first intermediate portion of the central liner 6
14: boss
15: hoop layer
16: first dome reinforcement shell
20: outer composite structure
22: dome-shaped portion of the first dome reinforcement shell 16
24: base of the dome-shaped portion 22
27: tip of the first dome reinforcement shell 16
28: dotted line
30: full line

## Claims

1. A pressure vessel (4; 4') comprising:
- a liner (6) defining an internal fluid storage chamber (3) and having:
• a generally cylindrical central portion (8) having a first outer diameter D1 at a first longitudinal end (8a),
• a first dome-shaped longitudinal end (12) having a base (12a) of a second outer diameter D2, the second outer diameter D2 being smaller than the first outer diameter D1, and
• a first intermediate portion (13) located between the generally cylindrical central portion (8) and the first dome-shaped longitudinal end (12) and connecting the first longitudinal end (8a) of the generally cylindrical central portion (8) to the base (12a) of the first dome-shaped longitudinal end (12),
wherein said first dome-shaped longitudinal end (12) of the liner (6) has a dome contour which is less concave toward the internal fluid storage chamber (3) than a dome-shaped longitudinal end having a geodesic dome contour,
- a first dome reinforcement shell (16) having a shape complementary to the shape of both the first dome-shaped longitudinal end (12) and the first intermediate portion (13) of the liner (6), the first dome reinforcement shell (16) being fitted on both the first dome-shaped longitudinal end (12) and the first intermediate portion (13) of the liner (6),
- a boss (14), and
- an outer composite structure (20) enclosing or encasing the liner (6), **characterized in that** the outer composite structure (20) further encloses or encases the first dome reinforcement shell (16).

2. A pressure vessel (4; 4') according to claim 1, wherein the first dome reinforcement shell (16) has a dome contour which is less concave toward the internal fluid storage chamber (3) than a dome reinforcement shell having a geodesic dome contour.

3. A pressure vessel (4; 4') according to any of claims 1 to 2, wherein the first intermediate portion (13) of the liner (6) has an outer peripheral surface selected from the group consisting of cylindrical, frustoconical, curved and combinations thereof.

4. A pressure vessel (4; 4') according to claim 3, wherein the outer peripheral surface of the first intermediate portion (13) is a combination of a first frustoconical surface (9) and a first cylindrical surface (11).

5. A pressure vessel (4; 4') according to claim 4, wherein an angle γ formed between the first frustoconical surface (9) and the first cylindrical surface (11) of the first intermediate portion (13) is less than 15°, and preferably is less than 10°.

6. A pressure vessel (4; 4') according to any of claims 4 to 5, wherein an angle σ formed between the first frustoconical surface (9) and an outer peripheral surface of the generally cylindrical central portion (8) is less than 15°, and preferably is less than 10°.

7. A pressure vessel (4; 4') according to any of the previous claims, wherein a greatest distance between the dome contour of the first dome-shaped longitudinal end (12) and the dome contour of a dome-shaped longitudinal end having a geodesic dome contour is comprised between 0.1% and 5% of the first outer diameter D1, preferably between 0.5% and 2.5% of the first outer diameter D1.

8. A pressure vessel (4; 4') according to any of the previous claims, further comprising a hoop layer (15) wound around the generally cylindrical central portion (8) of the liner (6) such that the first outer diameter D1 includes the hoop layer (15).

9. A pressure vessel (4; 4') according to any of the previous claims, wherein
- the liner (6) further comprising:
• a third outer diameter at a second longitudinal end, opposite to the first longitudinal end (8a), of the generally cylindrical central portion (8),
• a second dome-shaped longitudinal end having a base of a fourth outer diameter, the fourth outer diameter being smaller than the third outer diameter, and
• a second intermediate portion located between the generally cylindrical central portion (8) and the second dome-shaped longitudinal end and connecting the second longitudinal end of the generally cylindrical central portion (8) to the base of the second dome-shaped longitudinal end,
wherein said second dome-shaped longitudinal end of the liner (6) has a dome contour which is less concave toward the internal fluid storage chamber than a dome-shaped longitudinal end having a geodesic dome contour,
- the pressure vessel further comprises a second dome reinforcement shell having a shape complementary to the shape of both the second dome-shaped longitudinal end and the second intermediate portion of the liner (6), said second dome reinforcement shell being fitted on both the second dome-shaped longitudinal end and the second intermediate portion of the liner (6), and
- the outer composite structure (20) enclosing or encasing the liner (6) and the two dome reinforcement shells.

10. A pressure vessel (4; 4') according to claim 9, wherein the third outer diameter is approximately equal to the first outer diameter D1.

11. A pressure vessel (4; 4') according to any of claims 9 to 10, wherein the fourth outer diameter is approximately equal to the second outer diameter D2.

12. A pressure vessel (4; 4') according to any of claims 9 to 11, wherein the second intermediate portion of the liner (6) has an outer peripheral surface selected from the group consisting of cylindrical, frustoconical, curved and combinations thereof.

13. A pressure vessel (4; 4') according to claim 12, wherein the outer peripheral surface of the second intermediate portion is a combination of a second frustoconical surface and a second cylindrical surface.

14. A pressure vessel (4; 4') according to claim 13, wherein an angle formed between the second frustoconical surface and the second cylindrical surface of the second intermediate portion is less than 15°, and preferably is less than 10°.

15. A pressure vessel (4; 4') according to any of claims 13 to 14, wherein an angle formed between the second frustoconical surface and an outer peripheral surface of the generally cylindrical central portion (8) is less than 15°, and preferably is less than 10°.

16. A pressure vessel (4; 4') according to any of claims 9 to 15, wherein a greatest distance between the dome contour of the second dome-shaped longitudinal end and the dome contour of a dome-shaped longitudinal end having a geodesic dome contour is comprised between 0.1% and 5% of the third outer diameter, preferably between 0.5% and 2.5% of the third outer diameter.

17. A pressure vessel (4; 4') according to any of claims 9 to 16, further comprising a hoop layer (15) wound around the generally cylindrical central portion (8) of the liner (6) such that the third outer diameter includes the hoop layer (15).

18. Vehicle (2) comprising a pressure vessel (4; 4') according to any of the previous claims.

## Patentansprüche

1. Druckbehälter (4; 4'), aufweisend:
- eine Auskleidung (6), die eine innere Flüssigkeitsspeicherkammer (3) definiert und aufweist:
• einen allgemein zylindrischen mittleren Abschnitt (8) mit einem ersten Außendurchmesser D1 an einem ersten Längsende (8a),
• ein erstes kuppelförmiges Längsende (12) mit einer Basis (12a) mit einem zweiten Außendurchmesser D2, wobei der zweite Außendurchmesser D2 kleiner als der erste Außendurchmesser D1 ist, und
• einen ersten Zwischenabschnitt (13), der zwischen dem allgemein zylindrischen mittleren Abschnitt (8) und dem ersten kuppelförmigen Längsende (12) angeordnet ist und das erste Längsende (8a) des allgemein zylindrischen mittleren Abschnitts (8) mit der Basis (12a) des ersten kuppelförmigen Längsendes (12) verbindet,
wobei das erste kuppelförmige Längsende (12) der Auskleidung (6) eine Kuppelkontur hat, die weniger konkav in Richtung der inneren Flüssigkeitsspeicherkammer (3) ist als ein kuppelförmiges Längsende mit einer geodätischen Kuppelkontur,
- eine erste kuppelförmige Verstärkungsschale (16) mit einer Form, die komplementär zu der Form sowohl des ersten kuppelförmigen Längsendes (12) als auch des ersten Zwischenabschnitts (13) der Auskleidung (6) ist, wobei die erste kuppelförmige Verstärkungsschale (16) sowohl auf das erste kuppelförmige Längsende (12) als auch auf den ersten Zwischenabschnitt (13) der Auskleidung (6) aufgesetzt ist,
- einen Vorsprung (14), und
- eine äußere Verbundstruktur (20), die die Auskleidung (6) umschließt oder umhüllt, **dadurch gekennzeichnet, dass** die äußere Verbundstruktur (20) ferner die erste kuppelförmige Verstärkungsschale (16) umschließt oder umhüllt.

2. Druckbehälter (4; 4') nach Anspruch 1, wobei die erste kuppelförmige Verstärkungsschale (16) eine Kuppelkontur aufweist, die zur inneren Flüssigkeitsspeicherkammer (3) hin weniger konkav ist als eine kuppelförmige Verstärkungsschale mit einer geodätischen Kuppelkontur.

3. Druckbehälter (4; 4') nach einem der Ansprüche 1 bis 2, wobei der erste Zwischenabschnitt (13) der Auskleidung (6) eine äußere Umfangsfläche aufweist, die aus der Gruppe bestehend aus zylindrisch, kegelstumpfförmig, gekrümmt und Kombinationen davon ausgewählt ist.

4. Druckbehälter (4; 4') nach Anspruch 3, wobei die äußere Umfangsfläche des ersten Zwischenabschnitts (13) eine Kombination aus einer ersten kegelstumpfförmigen Oberfläche (9) und einer ersten zylindrischen Oberfläche (11) ist.

5. Druckbehälter (4; 4') nach Anspruch 4, wobei ein zwischen der ersten kegelstumpfförmigen Oberfläche (9) und der ersten zylindrischen Oberfläche (11) des ersten Zwischenabschnitts (13) gebildeter Winkel γ weniger als 15° und vorzugsweise weniger als 10° beträgt.

6. Druckbehälter (4; 4') nach einem der Ansprüche 4 bis 5, wobei ein zwischen der ersten kegelstumpfförmigen Oberfläche (9) und einer äußeren Umfangsfläche des allgemein zylindrischen mittleren Abschnitts (8) gebildeter Winkel σ weniger als 15° und vorzugsweise weniger als 10° beträgt.

7. Druckbehälter (4; 4') nach einem der vorhergehenden Ansprüche, wobei der größte Abstand zwischen der Kuppelkontur des ersten kuppelförmigen Längsendes (12) und der Kuppelkontur eines kuppelförmigen Längsendes mit einer geodätischen Kuppelkontur zwischen 0,1 % und 5 % des ersten Außendurchmessers D1, vorzugsweise zwischen 0,5 % und 2,5 % des ersten Außendurchmessers D1 beträgt.

8. Druckbehälter (4; 4') nach einem der vorhergehenden Ansprüche, ferner mit einer Ringschicht (15), die um den allgemein zylindrischen mittleren Abschnitt (8) der Auskleidung (6) gewickelt ist, so dass der erste Außendurchmesser D1 die Ringschicht (15) einschließt.

9. Druckbehälter (4; 4') nach einem der vorhergehenden Ansprüche, wobei
- die Auskleidung (6) ferner aufweist:
• einen dritten Außendurchmesser an einem zweiten, dem ersten Längsende (8a) gegenüberliegenden Längsende des allgemein zylindrischen mittleren Abschnitts (8),
• ein zweites kuppelförmiges Längsende mit einer Basis mit einem vierten Außendurchmesser, wobei der vierte Außendurchmesser kleiner als der dritte Außendurchmesser ist,
und
• einen zweiten Zwischenabschnitt, der zwischen dem allgemein zylindrischen mittleren Abschnitt (8) und dem zweiten kuppelförmigen Längsende angeordnet ist und das zweite Längsende des allgemein zylindrischen mittleren Abschnitts (8) mit der Basis des zweiten kuppelförmigen Längsendes verbindet,
wobei das zweite kuppelförmige Längsende der Auskleidung (6) eine kuppelförmige Kontur aufweist, die weniger konkav in Richtung der inneren Fluidspeicherkammer ist als ein kuppelförmiges Längsende mit einer geodätischen Kuppelkontur,
- der Druckbehälter ferner eine zweite kuppelförmige Verstärkungsschale mit einer Form aufweist, die komplementär zu der Form sowohl des zweiten kuppelförmigen Längsendes als auch des zweiten Zwischenabschnitts der Auskleidung (6) ist, wobei die zweite kuppelförmige Verstärkungsschale sowohl auf das zweite kuppelförmige Längsende als auch auf den zweiten Zwischenabschnitt der Auskleidung (6) aufgesetzt ist, und
- die äußere Verbundstruktur (20), die die Auskleidung (6) und die beiden kuppelförmigen Verstärkungsschalen umschließt oder einhüllt.

10. Druckbehälter (4; 4') nach Anspruch 9, wobei der dritte Außendurchmesser ungefähr gleich dem ersten Außendurchmesser D1 ist.

11. Druckbehälter (4; 4') nach einem der Ansprüche 9 bis 10, wobei der vierte Außendurchmesser etwa gleich dem zweiten Außendurchmesser D2 ist.

12. Druckbehälter (4; 4') nach einem der Ansprüche 9 bis 11, wobei der zweite Zwischenabschnitt der Auskleidung (6) eine äußere Umfangsfläche aufweist, die aus der Gruppe bestehend aus zylindrisch, kegelstumpfförmig, gekrümmt und Kombinationen davon ausgewählt ist.

13. Druckbehälter (4; 4') nach Anspruch 12, wobei die äußere Umfangsfläche des zweiten Zwischenabschnitts eine Kombination aus einer zweiten kegelstumpfförmigen Fläche und einer zweiten zylindrischen Fläche ist.

14. Druckbehälter (4; 4') nach Anspruch 13, wobei ein zwischen der zweiten kegelstumpfförmigen Oberfläche und der zweiten zylindrischen Oberfläche des zweiten Zwischenbereichs gebildeter Winkel weniger als 15° und vorzugsweise weniger als 10° beträgt.

15. Druckbehälter (4; 4') nach einem der Ansprüche 13 bis 14, wobei ein zwischen der zweiten kegelstumpfförmigen Oberfläche und einer äußeren Umfangsfläche des allgemein zylindrischen mittleren Abschnitts (8) gebildeter Winkel weniger als 15° und vorzugsweise weniger als 10° beträgt.

16. Druckbehälter (4; 4') nach einem der Ansprüche 9 bis 15, wobei der größte Abstand zwischen der Kuppelkontur des zweiten kuppelförmigen Längsendes und der Kuppelkontur eines kuppelförmigen Längsendes mit einer geodätischen Kuppelkontur zwischen 0,1 % und 5 % des dritten Außendurchmessers, vorzugsweise zwischen 0,5 % und 2,5 % des dritten Außendurchmessers beträgt.

17. Druckbehälter (4; 4') nach einem der Ansprüche 9 bis 16, ferner mit einer Ringschicht (15), die so um den allgemein zylindrischen mittleren Abschnitt (8) der Auskleidung (6) gewickelt ist, dass der dritte Außendurchmesser die Ringschicht (15) einschließt.

18. Fahrzeug (2) mit einem Druckbehälter (4; 4') nach einem der vorhergehenden Ansprüche.

## Revendications

1. Réservoir sous pression (4 ; 4') comprenant :
- une enveloppe interne (6) définissant une chambre de stockage de fluide interne (3) et ayant :
• une partie centrale généralement cylindrique (8) ayant un premier diamètre extérieur D1 à une première extrémité longitudinale (8a),
• une première extrémité longitudinale en forme de dôme (12) ayant une base (12a) ayant second diamètre extérieur D2, le second diamètre extérieur D2 étant plus petit que le premier diamètre extérieur D1, et
• une première partie intermédiaire (13) située entre la partie centrale généralement cylindrique (8) et la première extrémité longitudinale en forme de dôme (12) et reliant la première extrémité longitudinale (8a) de la partie centrale généralement cylindrique (8) à la base (12a) de la première extrémité longitudinale en forme de dôme (12),
dans lequel ladite première extrémité longitudinale en forme de dôme (12) de l'enveloppe interne (6) a un contour de dôme qui est moins concave vers la chambre de stockage de fluide interne (3) qu'une extrémité longitudinale en forme de dôme ayant un contour de dôme géodésique,
- une première coque de renfort de dôme (16) ayant une forme complémentaire à la forme de la première extrémité longitudinale en forme de dôme (12) et de la première partie intermédiaire (13) de l'enveloppe interne (6), la première coque de renfort de dôme (16) étant montée à la fois sur la première extrémité longitudinale en forme de dôme (12) et sur la première partie intermédiaire (13) de l'enveloppe interne (6),
- une embase (14), et
- une structure composite externe (20) renfermant ou enveloppant l'enveloppe interne (6), **caractérisée en ce que** la structure composite externe (20) renferme ou enveloppe en outre la première coque de renfort de dôme (16).

2. Réservoir sous pression (4 ; 4') selon la revendication 1, dans lequel la première coque de renfort de dôme (16) a un contour de dôme qui est moins concave vers la chambre de stockage de fluide interne (3) qu'une coque de renfort de dôme ayant un contour de dôme géodésique.

3. Réservoir sous pression (4 ; 4') selon l'une quelconque des revendications 1 à 2, dans lequel la première partie intermédiaire (13) de l'enveloppe interne (6) a une surface périphérique externe choisie parmi les formes cylindrique, tronconique, courbée et des combinaisons de celles-ci.

4. Réservoir sous pression (4 ; 4') selon la revendication 3, dans lequel la surface périphérique externe de la première partie intermédiaire (13) est une combinaison d'une première surface tronconique (9) et d'une première surface cylindrique (11).

5. Réservoir sous pression (4 ; 4') selon la revendication 4, dans lequel un angle γ formé entre la première surface tronconique (9) et la première surface cylindrique (11) de la première partie intermédiaire (13) est inférieur à 15°, et de préférence inférieur à 10°.

6. Réservoir sous pression (4 ; 4') selon l'une quelconque des revendications 4 à 5, dans lequel un angle σ formé entre la première surface tronconique (9) et une surface périphérique externe de la partie centrale généralement cylindrique (8) est inférieur à 15°, et de préférence inférieur à 10°.

7. Réservoir sous pression (4 ; 4') selon l'une quelconque des revendications précédentes, dans lequel une plus grande distance entre le contour de dôme de la première extrémité longitudinale en forme de dôme (12) et le contour du dôme d'une extrémité longitudinale en forme de dôme ayant un contour de dôme géodésique est comprise entre 0,1 % et 5 % du premier diamètre extérieur D1, de préférence entre 0,5 % et 2,5 % du premier diamètre extérieur D1.

8. Réservoir sous pression (4 ; 4') selon l'une quelconque des revendications précédentes, comprenant en outre une couche de cerclage (15) enroulée autour de la partie centrale généralement cylindrique (8) de l'enveloppe interne (6) de telle sorte que le premier diamètre extérieur D1 inclut la couche de cerclage (15).

9. Réservoir sous pression (4 ; 4') selon l'une quelconque des revendications précédentes, dans lequel :
- l'enveloppe interne (6) comprend en outre :
• un troisième diamètre extérieur au niveau d'une seconde extrémité longitudinale, à l'opposé de la première extrémité longitudinale (8a), de la partie centrale généralement cylindrique (8),
• une seconde extrémité longitudinale en forme de dôme ayant une base ayant un quatrième diamètre extérieur, le quatrième diamètre extérieur étant plus petit que le troisième diamètre extérieur, et
• une seconde partie intermédiaire agencée entre la partie centrale généralement cylindrique (8) et la seconde extrémité longitudinale en forme de dôme et reliant la seconde extrémité longitudinale de la partie centrale généralement cylindrique (8) à la base de la seconde extrémité longitudinale en forme de dôme,
dans lequel ladite seconde extrémité longitudinale en forme de dôme de l'enveloppe interne (6) a un contour de dôme qui est moins concave vers la chambre de stockage de fluide interne qu'une extrémité longitudinale en forme de dôme ayant un contour de dôme géodésique,
- le réservoir sous pression comprend en outre une seconde coque de renfort de dôme ayant une forme complémentaire à la forme de la seconde extrémité longitudinale en forme de dôme et de la seconde partie intermédiaire de l'enveloppe interne (6), ladite seconde coque de renfort de dôme étant montée à la fois sur la seconde extrémité longitudinale en forme de dôme et sur la seconde partie intermédiaire de l'enveloppe interne (6), et
- la structure composite externe (20) renfermant ou enveloppant l'enveloppe interne (6) et les deux coques de renfort de dôme.

10. Réservoir sous pression (4 ; 4') selon la revendication 9, dans lequel le troisième diamètre extérieur est approximativement égal au premier diamètre extérieur D1.

11. Réservoir sous pression (4 ; 4') selon l'une quelconque des revendications 9 à 10, dans lequel le quatrième diamètre extérieur est approximativement égal au second diamètre extérieur D2.

12. Réservoir sous pression (4 ; 4') selon l'une quelconque des revendications 9 à 11, dans lequel la seconde partie intermédiaire de l'enveloppe interne (6) a une surface périphérique externe choisie parmi les formes cylindrique, tronconique, courbée et des combinaisons de celles-ci.

13. Réservoir sous pression (4 ; 4') selon la revendication 12, dans lequel la surface périphérique externe de la seconde partie intermédiaire est une combinaison d'une seconde surface tronconique et d'une seconde surface cylindrique.

14. Réservoir sous pression (4 ; 4') selon la revendication 13, dans lequel un angle formé entre la seconde surface tronconique et la seconde surface cylindrique de la seconde partie intermédiaire est inférieur à 15°, et de préférence inférieur à 10°.

15. Réservoir sous pression (4 ; 4') selon l'une quelconque des revendications 13 à 14, dans lequel un angle formé entre la seconde surface tronconique et une surface périphérique externe de la partie centrale généralement cylindrique (8) est inférieur à 15°, et de préférence inférieur à 10°.

16. Réservoir sous pression (4 ; 4') selon l'une quelconque des revendications 9 à 15, dans lequel une plus grande distance entre le contour du dôme de la seconde extrémité longitudinale en forme de dôme et le contour de dôme d'une extrémité longitudinale en forme de dôme ayant un contour de dôme géodésique est comprise entre 0,1 % et 5 % du troisième diamètre extérieur, de préférence entre 0,5 % et 2,5 % du troisième diamètre extérieur.

17. Réservoir sous pression (4 ; 4') selon l'une quelconque des revendications 9 à 16, comprenant en outre une couche de cerclage (15) enroulée autour de la partie centrale généralement cylindrique (8) de l'enveloppe interne (6) de sorte que le troisième diamètre extérieur inclut la couche de cerclage (15).

18. Véhicule (2) comprenant un réservoir sous pression (4 ; 4') selon l'une quelconque des revendications précédentes.
